# EUROPEAN PATENT APPLICATION

(11) **EP 3 270 298 A1**
(43) Date of publication of application: **17.01.2018**
(21) Application number: 15887285.3
(22) Date of filing: 20.11.2015
(51) Int. Cl.: G06F 17/30

(54) **SERVER AND DATA PROCESSING METHOD**

(30) Priority: 31.03.2015 CN 201510148274
(71) Applicant: Huawei Technologies Co. Ltd., Shenzhen, Guangdong 518129 (CN)
(72) Inventor: ZENG, Jianguo, Shenzhen Guangdong 518129 (CN); QIN, Yi, Shenzhen Guangdong 518129 (CN)
(74) Representative: Thun, Clemens
(86) International application number: PCT/CN2015/095169
(87) International publication number: WO 2016/155332

(57) **Abstract**

The present invention relates to computer communications technologies, and in particular, to a server and a data processing method, so that transaction management is implemented in a cloud service scenario simply. A second data server provided in embodiments of the present invention is connected to an application server and a cloud first data server, and receives a first operation request that is used to request a first persistence layer service provided by the first data server and that is sent by the application server, where the request includes at least one operation that belongs to a same transaction. A transaction management module of the second data server performs the at least one operation on second data in the second data server, where the second data is the same as first data in the first data server. If each operation is performed successfully, a second operation request is generated, so as to request to perform the at least one operation on the first data, and the second operation request is sent to the first data server. A persistence layer service that has a transaction management function is provided between an application service and a cloud service, so that the application service does not need to implement transaction management, thereby reducing complexity of the application service.

## Description

This application claims priority to Chinese Patent Application No. 201510148274.X, filed with the Chinese Patent Office on March 31, 2015, and entitled "SERVER AND DATA PROCESSING METHOD", which is incorporated herein by reference in its entirety.

### TECHNICAL FIELD

The present invention relates to computer communications technologies, and in particular, to a server and a data processing method.

### BACKGROUND

According to a conventional database transaction management technology, a data operation is generally divided into three steps: pre-submission, submission, and rollback due to a data operation failure. "Pre-submission" refers to that all operations in a transaction are performed in a cache; if all the operations are successful, "submission" is performed, and otherwise, "rollback" is performed. "Submission" refers to writing data into a database. "Rollback" refers to clearing a cache to restore data existing before pre-submission.

A persistence layer service is used to shield a different database deployment form, a version difference, and/or a different database provider, so as to provide a unified database access interface to an application.

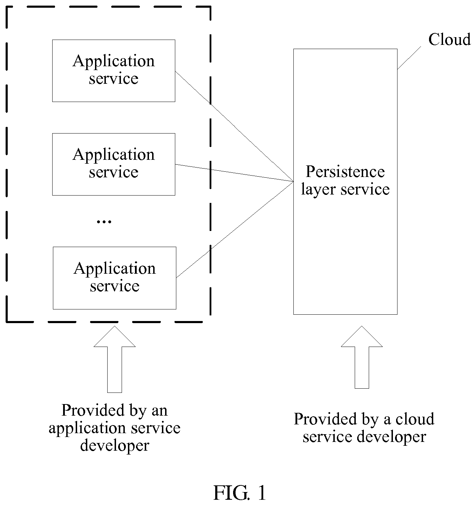

FIG. 1 shows a typical architecture of providing a persistence layer service to an application service in a cloud service scenario. The application service (Application Service, App Service) sends a request to a cloud persistence layer service, and the persistence layer service responds to the request of the application service and provides a service to an application. During specific implementation, generally the application service and the persistence layer service are implemented by different developers. A cloud service developer provides the persistence layer service, but the provided persistence layer service generally does not have a transaction management function. This is because the persistence layer service needs to be compatible with different types of databases, but different types of databases have different mechanisms for implementing a transaction management function, and if the persistence layer service provides a transaction management function, the persistence layer service needs to adapt to all transaction management implementation mechanisms of different databases. In addition, some databases do not have a transaction management function, which further increases a difficulty for the persistence layer service to provide a transaction management function.

In another aspect, currently, a common implementation manner of the persistence layer service is: the persistence layer service provides an extensible data storage capability by using a non-relational database and a storage area network (Storage Area Network, SAN) or network attached storage (Network Attached Storage, NAS) together, instead of organizing data by using a conventional relational database. In this case, if the persistence layer service itself implements a transaction management function, additional data processing resources need to be consumed. When a relatively large quantity of data processing resources is occupied, the persistence layer service may be affected if available data processing resources of the persistence layer service are limited. Therefore, in a current cloud service scenario, different application service developers themselves generally need to provide a transaction management function. As a result, application development is highly complex. In addition, transaction management functions of different applications are relatively greatly different, and therefore it is hard to ensure compatibility.

### SUMMARY

Embodiments of the present invention provide a server and a data processing method, which are used to provideif a simple transaction management implementation solution if a persistence layer service provided by a cloud service developer does not have a transaction management function in a cloud service scenario, so as to reduce implementation complexity of an application service. According to a first aspect, an embodiment of the present invention provides a second data server, where the second data server is in communication connection with a first data server and one or more application servers; the one or more application servers are configured to provide an application service; the first data server is configured to provide a first persistence layer service, and the first data server includes first data; the second data server is configured to provide a second persistence layer service, the second data server includes second data, and the second data includes data the same as the first data; the second data server provides a second application programming interface API to the one or more application servers, and the one or more application servers request the first persistence layer service from the first data server by invoking the second API; the first data server provides a first API to the second data server, and the second data server requests the first persistence layer service by invoking the first API; and
the second data server includes:
a second interface, configured to provide the second API and receive a first operation request that is sent by the one or more application servers by invoking the second API, where the first operation request is used to request to perform at least one operation and the at least one operation belongs to a same transaction;
a transaction management module, configured to perform the at least one operation on the second data after determining that the first operation request is used to request the first persistence layer service to perform the at least one operation; and generate a second operation request if each operation is performed successfully, where the second operation request is used to request to perform the at least one operation on the first data; and
a first interface, configured to invoke the first API to send the second operation request to the first data server.

With reference to the first aspect, in a first possible implementation manner, when determining that the first operation request is used to request the first persistence layer service to perform the at least one operation, the transaction management module is specifically configured to:
determine, according to identity information of the first persistence layer service or user protocol information that is used to indicate that the application service requests the first persistence layer service, that the first operation request is used to request the first persistence layer service to perform the at least one operation, where the identity information and the user protocol information are in the first operation request.

With reference to the first aspect or the first possible implementation manner of the first aspect, in a second possible implementation manner, the transaction management module is further configured to:
if the at least one operation is performed unsuccessfully, roll back the second data to a status existing before the at least one operation is performed.

With reference to the second possible implementation manner of the first aspect, in a third possible implementation manner, when performing each operation of the at least one operation on the second data, the transaction management module is specifically configured to:
perform decomposing processing on the at least one operation, where the decomposing processing includes: breaking an operation, targeting multiple resource objects, of the at least one operation into multiple atomic operations targeting a single resource object each, where the resource object is a resource object managed by the first persistence layer service, and the atomic operation is an operation that cannot be further broken down with respect to the resource object managed by the first persistence layer service; and
perform transaction management on the atomic operations obtained after the decomposing processing, where the transaction management includes: for each atomic operation obtained after the decomposing processing, recording a correspondence among a type of the atomic operation, an identity of a resource object targeted by the atomic operation, and a transaction identity of the same transaction; and performing each atomic operation obtained after the decomposing processing.

With reference to the third possible implementation manner of the first aspect, in a fourth possible implementation manner,
when rolling back the second data to the status existing before each operation of the at least one operation is performed, the transaction management module is specifically configured to:
roll back, according to the correspondence recorded during the transaction processing, the second data to the status existing before each operation of the at least one operation is performed.

With reference to the first aspect or any one of the first possible implementation manner to the fourth possible implementation manner of the first aspect, in a fifth possible implementation manner,
the first operation request includes the transaction identity of the same transaction; and
when generating the second operation request, the transaction management module is specifically configured to remove the transaction identity of the same transaction from the first operation request, to generate the second operation request.

With reference to the first aspect or any one of the first possible implementation manner to the fifth possible implementation manner of the first aspect, in a sixth possible implementation manner,
the transaction management module is further configured to generate a failure response to the first operation request if the at least one operation is performed unsuccessfully, where the failure response is used to indicate that the at least one operation is performed unsuccessfully; and
the second interface is further configured to send the failure response to the one or more application servers.

With reference to the sixth possible implementation manner of the first aspect, in a seventh possible implementation manner, the failure response includes at least one type of the following information of an unsuccessfully performed operation of the at least one operation:
an operation type;
a resource object, targeted by the operation, of the first persistence layer service; or
a failure reason of the operation.

With reference to the first aspect or any one of the first possible implementation manner to the seventh possible implementation manner of the first aspect, in an eighth possible implementation manner, the second data server and the first data server are a same server; or
the second data server and the first data server are different servers; or
the application server and the second data server are a same server.

With reference to the eighth possible implementation manner of the first aspect, in a ninth possible implementation manner, the second data server and the first data server are different servers; and
the first data server and the second data server are cloud servers, and the first data server and the second data server host on different virtual machines VMs.

According to a second aspect, an embodiment of the present invention provides an application server, where a second data server is in communication connection with a first data server and one or more application servers; the application server is configured to provide an application service; the first data server is configured to provide a first persistence layer service, and the first data server includes first data; the second data server provides a second application programming interface API to the one or more application servers, and the one or more application servers request the first persistence layer service from the first data server by invoking the second API; the first data server provides a first API to the second data server, and the second data server requests the first persistence layer service by invoking the first API; and
the application server includes:
an operation request generation module, configured to: generate a first operation request, and indicate that the first operation request is used to request the first persistence layer service to perform at least one operation, where the at least one operation belongs to a same transaction, and the first operation request includes indication information used to indicate that the first operation request is used to request the first persistence layer service; and
an interface, configured to invoke the second API to send the first operation request to the second data server, so as to instruct the second data server to: perform the at least one operation on the second data; and generate a second operation request if each operation is performed successfully, and send the second operation request to the first data server by invoking the first API, where the second operation request is used to request to perform the at least one operation on the first data.

With reference to the second aspect, in a first possible implementation manner, the indication information used to indicate that the first operation request is used to request the first persistence layer service includes:
identity information of the first persistence layer service; or
user protocol information that is used to indicate that the application service requests the first persistence layer service.

With reference to the second aspect or the first possible implementation manner of the second aspect, in a second possible implementation manner,
the first operation request is further used to instruct the second data server to: when the at least one operation is performed unsuccessfully, roll back the second data to a status existing before the at least one operation is performed.

With reference to the second aspect or the first possible implementation manner or the second possible implementation manner of the second aspect, in a third possible implementation manner, the first operation request includes a transaction identity of the same transaction.

With reference to the second aspect or any one of the first possible implementation manner to the third possible implementation manner of the second aspect, in a fourth possible implementation manner, the interface is further configured to:
receive a failure response sent by the second data server after the at least one operation is performed unsuccessfully, where
the failure response is used to indicate that the at least one operation is performed unsuccessfully.

With reference to the fourth possible implementation manner of the second aspect, in a fifth possible implementation manner, the failure response includes at least one type of the following information of an unsuccessfully performed operation of the at least one operation:
an operation type;
a resource object, targeted by the operation, of the first persistence layer service; or
a failure reason of the operation.

With reference to the second aspect or any one of the first possible implementation manner to the fifth possible implementation manner of the second aspect, in a sixth possible implementation manner, the application server and the second data server are a same server.

According to a third aspect, an embodiment of the present invention provides a data processing method applied to a second data server, where the second data server is in communication connection with a first data server and one or more application servers; the application server is configured to provide an application service; the first data server is configured to provide a first persistence layer service, and the first data server includes first data; the second data server is configured to provide a second persistence layer service, the second data server includes second data, and the second data includes data the same as the first data; the second data server provides a second application programming interface API to the application server, and the application server requests the first persistence layer service from the first data server by invoking the second API; the first data server provides a first API to the second data server, and the second data server requests the first persistence layer service by invoking the first API; and the method includes:
receiving, by the second data server, a first operation request sent by the one or more application servers, where the first operation request is sent by the one or more application servers by invoking the second API and is used to request to perform at least one operation, and the at least one operation belongs to a same transaction;
performing, by the second data server, the at least one operation on the second data after determining that the first operation request is used to request the first persistence layer service to perform the at least one operation; and
generating, by the second data server, a second operation request if each operation is performed successfully, and sending the second operation request to the first data server by invoking the first API, where the second operation request is used to request to perform the at least one operation on the first data.

With reference to the third aspect, in a first possible implementation manner, the determining, by the second data server, that the first operation request is used to request the first persistence layer service to perform the at least one operation includes:
determining, by the second data server according to identity information of the first persistence layer service or user protocol information that is used to indicate that the application service requests the first persistence layer service, that the first operation request is used to request the first persistence layer service, where the identity information and the user protocol information are in the first operation request.

With reference to the third aspect or the first possible implementation manner of the third aspect, in a second possible implementation manner, the method further includes:
if the at least one operation is performed unsuccessfully, rolling back, by the second data server, the second data to a status existing before the at least one operation is performed.

With reference to the second possible implementation manner of the third aspect, in a third possible implementation manner,
the performing, by the second data server, each operation of the at least one operation on the second data includes:
performing, by the second data server, decomposing processing on the at least one operation, where the decomposing processing includes: breaking an operation, targeting multiple resource objects, of the at least one operation into multiple atomic operations targeting a single resource object each, where the resource object is a resource object managed by the first persistence layer service, and the atomic operation is an operation that cannot be further broken down with respect to the resource object managed by the first persistence layer service; and
performing, by the second data server, transaction management on the atomic operations obtained after the decomposing processing, where the transaction management includes: for each atomic operation obtained after the decomposing processing, recording a correspondence among a type of the atomic operation, an identity of a resource object targeted by the atomic operation, and a transaction identity of the same transaction; and performing each atomic operation obtained after the decomposing processing.

With reference to the third possible implementation manner of the third aspect, in a fourth possible implementation manner,
the rolling back, by the second data server, the second data to a status existing before each operation of the at least one operation is performed includes:
rolling back, by the second data server according to the correspondence recorded during the transaction processing, the second data to the status existing before each operation of the at least one operation is performed.

With reference to the third aspect or any one of the first possible implementation manner to the fourth possible implementation manner of the third aspect, in a fifth possible implementation manner,
the first operation request includes the transaction identity of the same transaction; and
the generating, by the second data server, a second operation request includes: removing, by the second data server, the transaction identity of the same transaction from the first operation request, to generate the second operation request.

With reference to the third aspect or any one of the first possible implementation manner to the fifth possible implementation manner of the third aspect, in a sixth possible implementation manner,
the method further includes: if the at least one operation is performed unsuccessfully, sending, by the second data server to the one or more application servers, a failure response to the first operation request, where the failure response is used to indicate that the at least one operation is performed unsuccessfully.

With reference to the sixth possible implementation manner of the third aspect, in a seventh possible implementation manner, the failure response includes at least one type of the following information of an unsuccessfully performed operation of the at least one operation:
an operation type;
a resource object, targeted by the operation, of the first persistence layer service; or
a failure reason of the operation.

With reference to the third aspect or any one of the first possible implementation manner to the seventh implementation manner of the third aspect, in an eighth possible implementation manner, the first server and the second data server are cloud servers, and the first data server and the second data server host on different virtual machines VMs.

According to a fourth aspect, an embodiment of the present invention provides a data processing method applied to one or more application servers, where a second data server is in communication connection with a first data server and the one or more application servers; the one or more application servers are configured to provide an application service; the first data server is configured to provide a first persistence layer service, and the first data server includes first data; the second data server provides a second application programming interface API to the application server, and the one or more application servers request the first persistence layer service from the first data server by invoking the second API; the first data server provides a first API to the second data server, and the second data server requests the first persistence layer service by invoking the first API; and the method includes:
generating, by the one or more application servers, a first operation request, where the first operation request is used to request the first persistence layer service to perform at least one operation, the at least one operation belongs to a same transaction, and the first operation request includes indication information used to indicate that the first operation request is used to request the first persistence layer service; and
sending, by the one or more application servers, the first operation request to the second data server by invoking the second API, so as to instruct the second data server to:
   perform the at least one operation on the second data; and generate a second operation request if each operation is performed successfully, and send the second operation request to the first data server by invoking the first API, where the second operation request is used to request to perform the at least one operation on the first data.

With reference to the fourth aspect, in a first possible implementation manner, the indication information used to indicate that the first operation request is used to request the first persistence layer service includes:
identity information of the first persistence layer service; or
user protocol information that is used to indicate that the application service requests the first persistence layer service.

With reference to the fourth aspect or the first possible implementation manner of the fourth aspect, in a second possible implementation manner:
the first operation request is further used to instruct the second data server to: when the at least one operation is performed unsuccessfully, roll back the second data to a status existing before the at least one operation is performed.

With reference to the fourth aspect or the first possible implementation manner or the second possible implementation manner of the fourth aspect, in a third possible implementation manner, the first operation request includes a transaction identity of the same transaction.

With reference to the fourth aspect or any one of the first possible implementation manner to the third possible implementation manner of the fourth aspect, in a fourth possible implementation manner, the method further includes:
receiving, by the one or more application servers, a failure response sent by the second data server by using the second API after the at least one operation is performed unsuccessfully, where
the failure response is used to indicate that the at least one operation is performed unsuccessfully.

With reference to the fourth possible implementation manner of the fourth aspect, in a fifth possible implementation manner, the failure response includes at least one type of the following information of an unsuccessfully performed operation of the at least one operation:
an operation type;
a resource object, targeted by the operation, of the first persistence layer service; or
a failure reason of the operation.

With reference to the fourth aspect or any one of the first possible implementation manner to the fifth possible implementation manner of the fourth aspect, in a sixth possible implementation manner,
the first data server and the second data server are cloud servers, and the first data server and the second data server host on different virtual machines VMs.

In summary, the embodiments of the present invention provide a server and a data processing method. A persistence layer service that has a transaction management function is provided between an application service and a cloud persistence layer service, so that a unified transaction management capability is provided to different application services without requiring the application services themselves to implement transaction management, and implementation complexity of the application service is reduced.

In addition, because the persistence layer service that has a transaction management function implements transaction management, multiple application services may implement a transaction management function by using the persistence layer service, avoiding redundant development and configuration caused by repeated implementation of a transaction management function on each application service, and related compatibility problems.

In addition, a problem is also avoided that if the application service directly sends an operation request to the cloud persistence layer service and some operations are performed unsuccessfully, because the cloud service does not have a transaction management function, data cannot be restored to a status existing before these operations are performed.

Further, when failing in transaction management, the persistence layer service that has a transaction management function performs data rollback, ensuring data consistency between the persistence layer service that has a transaction management function and the cloud persistence layer service. Further, the persistence layer service that has a transaction management function is also located in cloud, and a cloud server including the persistence layer service and a cloud server including an original cloud persistence layer service host on different virtual machines (Virtual Machine, VM). In one aspect, implementing, by a cloud VM, the persistence layer service that has a transaction management function may implement on-demand data resource assignment. In another aspect, the cloud server including the persistence layer service that has a transaction management function and the cloud server including the original cloud persistence layer service host on different VMs, which avoids that the persistence layer service that has a transaction management function occupies a data processing resource for the original persistence layer service, and therefore avoids impact on the original persistence layer service.

### BRIEF DESCRIPTION OF DRAWINGS

FIG. 1 is a typical network architecture diagram of providing a persistence layer service to an application service in a cloud service scenario;
FIG. 2 is a network architecture diagram of providing a persistence layer service that has a transaction management function to an application service according to an embodiment of the present invention;
FIG. 3A to FIG. 3C are schematic diagrams of three optional implementation manners of a network shown in FIG. 2;
FIG. 4 to FIG. 6 are schematic diagrams of three manners of implementing a transaction management function according to an embodiment of the present invention;
FIG. 7 is a schematic structural diagram of a first type of second data server according to an embodiment of the present invention;
FIG. 8 is a schematic structural diagram of a second type of second data server according to an embodiment of the present invention;
FIG. 9 is a schematic structural diagram of a first type of application server according to an embodiment of the present invention;
FIG. 10 is a schematic structural diagram of a second type of application server according to an embodiment of the present invention;
FIG. 11 is a flowchart of a first data processing method according to an embodiment of the present invention;
FIG. 12 is a flowchart of a second data processing method according to an embodiment of the present invention;
FIG. 13 is a network architecture diagram according to Embodiment 1 of the present invention;
FIG. 14 is an architecture component diagram of a persistence layer service in a cloud environment according to Embodiment 1 of the present invention;
FIG. 15 is an internal structural diagram of a transaction service in a persistence layer service according to Embodiment 1 of the present invention; and
FIG. 16 is a processing flowchart of a persistence layer service according to Embodiment 1 of the present invention.

### DESCRIPTION OF EMBODIMENTS

Embodiments of the present invention provide a server and a data processing method, which are used to provideif a simple transaction management implementation solution if a persistence layer service provided by a cloud service developer does not have a transaction management function in a cloud service scenario, so as to reduce implementation complexity of an application service.

To provide a transaction management function to an application service without increasing implementation complexity of the application service, in the embodiments of the present invention, a persistence layer service that has a transaction management function is provided between the application service and a cloud persistence layer service, so that transaction management by the application service is implemented without requiring the application service itself to implement transaction management, and implementation complexity of the application service is reduced.

In addition, because the persistence layer service that has a transaction management function implements transaction management, multiple application services may implement a transaction management function by using the persistence layer service, avoiding redundant development and configuration caused by repeated implementation of a transaction management function on each application service.

In addition, a problem is also avoided that if the application service directly sends an operation request to the cloud persistence layer service and some operations are performed unsuccessfully, because the cloud service does not have a transaction management function, data cannot be restored to a status existing before these operations are performed.

Further, when failing in transaction management, the persistence layer service that has a transaction management function performs data rollback, ensuring data consistency between the persistence layer service that has a transaction management function and the cloud persistence layer service. Further, the persistence layer service that has a transaction management function is also located in cloud, and a cloud server including the persistence layer service and a cloud server including an original cloud persistence layer service host on different VMs. In one aspect, implementing, by a cloud VM, the persistence layer service that has a transaction management function may implement on-demand data resource assignment. In another aspect, the cloud server including the persistence layer service that has a transaction management function and the cloud server including the original cloud persistence layer service host on different VMs, which avoids that the persistence layer service that has a transaction management function occupies a data processing resource for the original persistence layer service, and therefore avoids impact on the original persistence layer service.

The following describes the embodiments of the present invention in detail with reference to the accompanying drawings.

First, a network architecture of providing a persistence layer service that has a transaction management function to an application server in the embodiments of the present invention is described; then, three optional implementation manners of the network architecture are separately described; next, a second data server and an application server provided in the embodiments of the present invention are described; at last, a data processing method provided in the embodiments of the present invention is described.

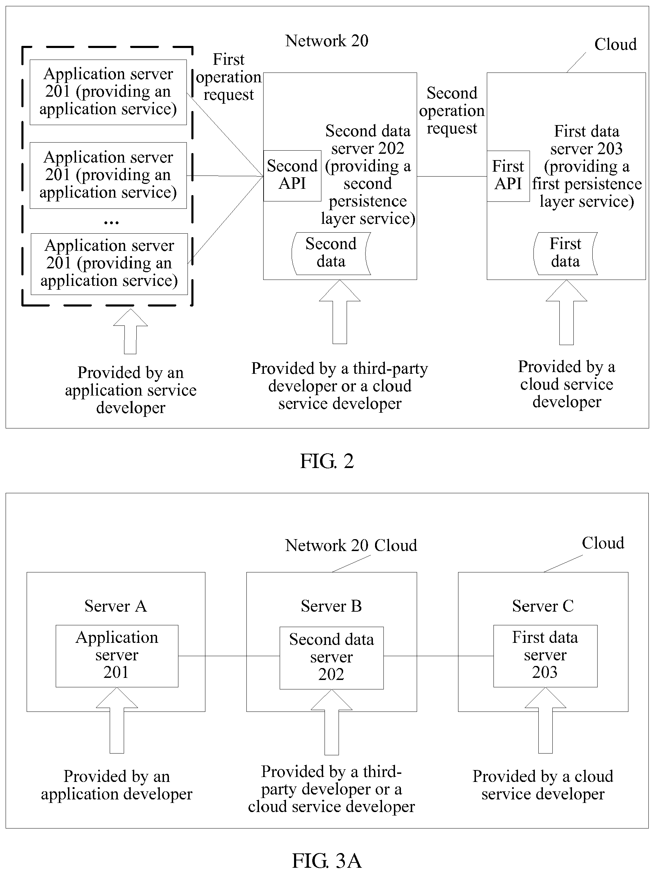

FIG. 2 is a network architecture diagram of providing a persistence layer service that has a transaction management function to an application service according to an embodiment of the present invention.

As shown in FIG. 2, a network 20 includes: a first data server 203, a second data server 202, and one or more application servers 201, where the second data server 202 is in communication connection with the first data server 203 and the one or more application servers 201;
the one or more application servers 201 are configured to provide an application service;
the first data server 203 is configured to provide a first persistence layer service, including first data;
the second data server 202 is configured to provide a second persistence layer service, including second data, and the second data includes data the same as the first data;
the second data server 202 provides a second application programming interface (Application Programming Interface, API) to the one or more application servers 201, and the application server 201 requests the first persistence layer service from the first data server by invoking the second API; and
the first data server 203 provides a first API to the second data server 202, and the second data server 202 requests the first persistence layer service by invoking the first API.

Specifically, the application server 201 is configured to: generate a first operation request, and indicate that the first operation request is used to request the first persistence layer service, where the first operation request is used to request to perform at least one operation, and the at least one operation belongs to a same transaction; and send the first operation request to the second data server 202 by invoking the second API.

The second data server 202 is configured to: receive the first operation request sent by the application server 201; perform the at least one operation on the second data after the second data server determines that the first operation request is used to request the first persistence layer service to perform the at least one operation; and generate a second operation request if each operation is performed successfully, and send the second operation request to the first data server 203 by invoking the first API, where the second operation request is used to request to perform the at least one operation on the first data.

The first data server 203 is configured to receive the second operation request sent by the second data server 202, and process the first data in the first data server 203 according to the second operation request.

The second data in the second data server 202 is consistent with the first data in the first data server 203. Optionally, before providing a service to the application server 201, the second data server 202 may copy the first data to generate the second data.

The first data in the first data server 203 and the second data in the second data server 202 may be data stored on a storage medium that supports power failure protection. For the storage medium that supports power failure protection, data on the storage medium will not be lost after power failure. The first data and the second data may be organized in multiple data forms, including but are not limited to a database, a document, a memory, and the like.

The application service provided by the application server 201 may be provided by an application developer, the first persistence layer service provided by the first data server 203 may be provided by a cloud service developer, and the second persistence layer service provided by the second data server 202 may be provided by a third-party developer or a cloud service developer.

Sending manners that may be used when the application server 201 sends the first operation request include but are not limited to the following three manners:
Manner 1: If a transaction identity (Transaction Id) of the same transaction to which the at least one operation in the first operation request belongs is not indicated, it may be considered that all operations in the first operation request belong to a same transaction and have a same transaction identity.
Manner 2: A transaction identity is indicated, but all operations in the first operation request belong to a same transaction.
Manner 3: A transaction identity is indicated, the at least one operation in the first operation request belongs to different transactions respectively, and when the application server 201 sends the first operation request, a transaction identity of a transaction to which each operation belongs is indicated.

Optionally, if the first operation request includes a transaction identity in the manner 2 and the manner 3, when generating the second operation request, the second data server 202 removes the transaction identity of the same transaction from the first operation request, to generate the second operation request.

The optional solution avoids a change in the first API provided by the first data server 203. In the cloud service scenario, the original persistence layer service generally does not have a transaction management function, and therefore the transaction identity is not recognized by the first data server 203. The second data server 202 removes the transaction identity, so as to be better compatible with the original persistence layer service.

In the manner 3, the first operation request includes multiple operations belonging to different transactions, for example, includes multiple operations belonging to a transaction 1 and multiple operations belonging to a transaction 2. The second data server 202 performs transaction management separately on the transaction 1 and the transaction 2. For the transaction 1, the generated second operation request includes only the multiple operations for the transaction 1, and for the transaction 2, the generated second operation request includes only the multiple operations for the transaction 2.

A transaction identity may be one field or a combination of multiple fields, provided that a transaction to which multiple operations on which the application server 201 expects to perform transaction management belong can be uniquely identified.

Optionally, the application server 201 may indicate, in the following manners, that the first operation request is used to request the first persistence layer service:
Manner 1:
   carrying, in the first operation request, identity information of the first persistence layer service.
Manner 2:
   carrying, in the first operation request, user protocol information that is used to indicate that the application service requests the first persistence layer service.

After receiving the first operation request, the second data server 202 may determine, according to the identity information of the first persistence layer service or the user protocol information that is used to indicate that the application service requests the first persistence layer service, that the first operation request is used to request the first persistence layer service, where the identity information and the user protocol information are in the first operation request.

Optionally, if the at least one operation is performed unsuccessfully, for example, when the at least one operation is performed one by one and a failure occurs in an operation, it is determined that the at least one operation is performed unsuccessfully. In this case, the second data server 202 rolls back the second data to a status existing before the at least one operation is performed. In this way, data rollback is performed when an operation fails, ensuring that the second data in the second data server 202 is consistent with the first data in the first data server 203.

In addition, optionally, if the at least one operation is performed unsuccessfully, the second data server 202 neither generates the second operation request nor sends the second operation request to the first data server 203.

Optionally, if optionally, if the at least one operation is performed unsuccessfully, the second data server 202 sends, to the application server 201, a failure response to the first operation request, to indicate that the at least one operation is performed unsuccessfully.

Further optionally, the failure response includes at least one type of the following information of the foregoing unsuccessfully performed operation:
an operation type;
a resource object, targeted by the operation, of the first persistence layer service; or
a failure reason of the operation.

The failure response is sent to the application server 201, so that the application server 201 learns an execution result of the first operation request; in addition, the application server 201 may learn, by using detailed information that is further provided, detailed information of some successfully performed operations, facilitating flexible processing by the application server 201.

The resource object refers to an object entity obtained in a modeling process of the technical field, and may be described by using a noun. Operations that may be performed on these entities include: Create, Retrieve, Update, and Delete.

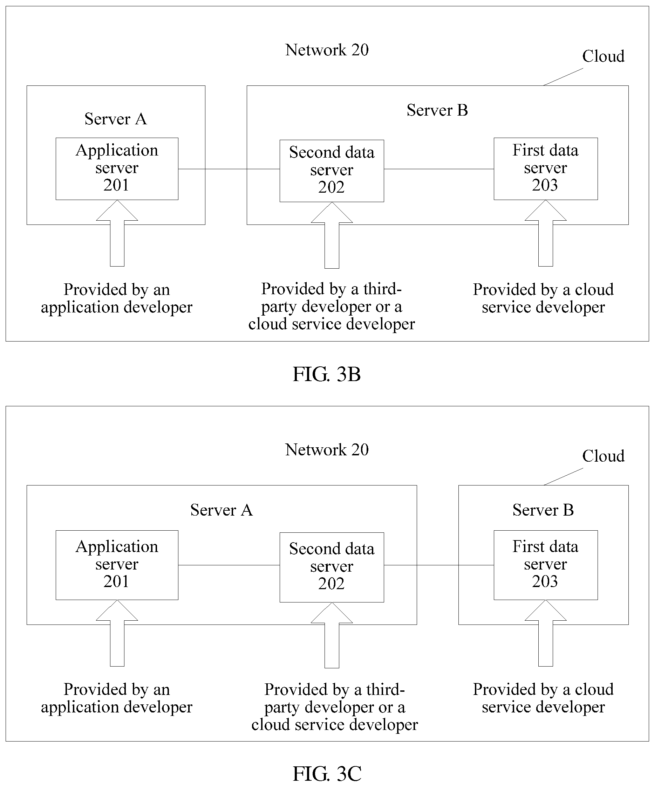

The network 20 shown in FIG. 2 may have multiple implementation manners. FIG. 3A to FIG. 3C show three optional implementation manners. For simple illustration, only one application server 201 is shown.

In FIG. 3A, the application server 201, the second data server 202, and the first data server 203 are respectively implemented on three different servers: a server A, a server B, and a server C. Optionally, the first data server 203 may be implemented in cloud, and the first data server 203 and the second data server 202 host on different VMs.

According to an implementation manner shown in FIG. 3A, in one aspect, implementing the second persistence layer service by a cloud VM may implement on-demand data resource assignment; in another aspect, the second data server 202 including the second persistence layer service that has a transaction management function and the first data server 203 including an original cloud first persistence layer service host on different VMs, which avoids that the second persistence layer service that has a transaction management function occupies a data processing resource for the original first persistence layer service, and therefore avoids impact on the original first persistence layer service.

In FIG. 3B, the application server 201 is implemented on a server A, and the first data server 203 and the second data server 202 are implemented on a same cloud server: a server B, where the server B is located in cloud. During specific implementation, the second persistence layer service provided by the second data server 202 may be implemented by installing a patch or a program on the first data server 203. Correspondingly, during network deployment, it is unnecessary to deploy the second data server 202 separately.

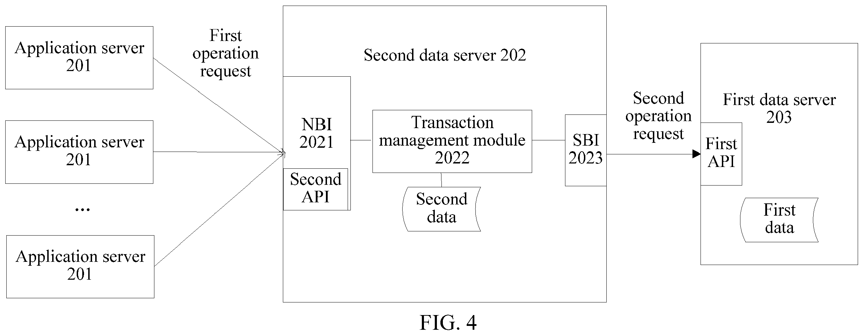

In FIG. 3B, the application server 201 and the second data server 202 are implemented on a same server: a server A, and the first data server 203 is implemented on a cloud server B. During specific implementation, the second persistence layer service provided by the second data server 202 may be implemented by installing a patch or a program on the application server 201. Correspondingly, during network deployment, it is unnecessary to deploy the second data server 202 separately. Optionally, the second data server 202 may have multiple implementation manners, including but are not limited to three implementation manners shown in FIG. 4 to FIG. 6. The following uses the three implementation manners as an example for description.

FIG. 4 is a schematic diagram of a first implementation manner of the second data server 202. As shown in FIG. 4, the second data server 202 includes:
a northbound interface (North Bound Interface, NBI) 2021, configured to provide a second API and receive a first operation request sent by an application server 201 by invoking the second API, where the first operation request is used to request to perform at least one operation and the at least one operation belongs to a same transaction;
a transaction management module 2022, configured to perform the at least one operation on second data after determining that the first operation request is used to request a first persistence layer service; and generate a second operation request if each operation is performed successfully, where the second operation request is used to request to perform the at least one operation on first data; and
a southbound interface (South Bound Interface, SBI) 2023, configured to invoke a first API to send the second operation request to a first data server 203.

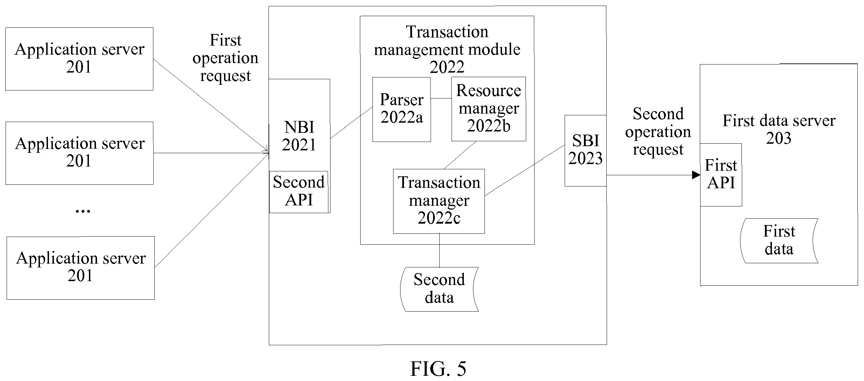

FIG. 5 is a schematic diagram of a second implementation manner of the second data server 202. A difference from the first implementation manner shown in FIG. 4 lies in that: a transaction management module 2022 is further divided into a parser 2022a, a resource manager 2022b, and a transaction manager 2022c. A connection relationship is shown in FIG. 5.

Specifically, the parser 2022a is configured to perform decomposing processing on at least one operation in a first operation request received by an NBI 2021.

The decomposing processing includes: breaking an operation, targeting multiple resource objects, of the at least one operation into multiple atomic operations targeting a single resource object each, where the resource object is a resource object managed by the first persistence layer service, and the atomic operation is an operation that cannot be further broken down with respect to the resource object managed by a first data server 203.

For example, a first operation request sent by an application server 201 is:

```
           NE{
           url:rest/ne,
           data:{[{objectid: id1,name:ne1,remark: core network element,...},{objectid:
           id2,name:ne2,remark:access network element,...}]},
           type:post,
           TransactionID:Transaction_Id1,
           },
           PORT{
           url:rest/port,
           data:{[{objectid: id3,name:port1,remark: connect ne1,... },{objectid:
           id4,name:port2,remark: connect ne2,... }]},
           type:post,
           TransactionID: Transaction_Id1,
           }
```

Resource objects targeted by the at least one operation in the first operation request include: ne1, ne2, port1, and port2, and an operation for all these resource objects is post, that is, creating a resource object. One operation herein corresponds to multiple resource objects. An ellipsis after a remark indicates another parameter that may be carried.

Here, a first operation request conforming to the RESTful format is used as an example. According to rules in the RESTful standard, an operation type may include CRUD, where
C represents Create and corresponds to Post in the RESTful standard;
R represents Retrieve and corresponds to get in the RESTful standard;
U represents Update and corresponds to put in the RESTful standard; and
D represents Delete and corresponds to delete in the RESTful standard.

Here, the RESTful format is only used as an example. During specific implementation, the NBI 2021 may receive a first operation request that conforms to any format and that is sent by the application server 201, for example, an operation request conforming to some network communications protocols such as the Simple Network Management Protocol (Simple Network Management Protocol, SNMP).

The first operation request conforming to the RESTful format is still used as an example. The parser 2022a breaks two post operations in the first operation request into four atomic operations, where the two post operations include one operation targeting ne1 and ne2 and one operation targeting port1 and port2, and the four atomic operations target resource objects ne1, ne2, port1, and port2 respectively.

Here, a data body (body) in the first operation request, that is, a part that is in braces after the data statement, conforms to the JavaScript object notation (JavaScript Object Notation, JSON) format. Optionally, the parser 2022a converts the format of the body in the first operation request, so that the body conforms to the JavaBean format.

A statement in the first operation request is used as an example. The four atomic operations obtained after breakdown and conversion are as follows, where a body in each pair of braces is one atomic operation.

```
           [
           {
           url:rest/ne,
           data: { [{objectid: id1,name: ne1,remark: core network element,...}]},
           type:post,
           TransactionID: Transaction_Id1,
           },
           {
           url:rest/ne,
           data: { [{objectid: id2,name: ne2,remark: access network element,...}]},
           type:post,
           TransactionID: Transaction_Id1,
           },
           {
           url:rest/port,
           data: { [{objectid: id3,name: port1,remark: connect ne1,...}]},
           type:post,
           TransactionID: Transaction_Id1,
           },
           {
           url:rest/port,
           data: { [{objectid: id4,name: port2,remark: connect ne2,... }]},
           type:post,
           TransactionID: Transaction_Id1,
           },
           ].
```

The foregoing four atomic operations are operations at a minimum granularity that cannot be further broken down with respect to the second data server 202.

In the foregoing decomposing processing of the first operation request, the parser 2022a breaks two post operations in the first operation request into four atomic operations, where the two post operations include one operation targeting ne1 and ne2 and one operation targeting port1 and port2, and the four atomic operations target resource objects ne1, ne2, port1, and port2 respectively. A purpose of the decomposing processing is to perform padlocking according to a resource object, so that operations targeting a same resource object can be performed in sequence. Padlocking refers to that if two operations target a same resource object, a second operation needs to wait when a first operation is performed. The resource manager 2022b is an optional part, and is configured to perform resource management on each atomic operation that is obtained after the decomposing processing performed by the parser 2022a. The resource management includes: generating, by using each atomic operation, an atomic operation queue belonging to a same transaction, and the same transaction is a transaction identified by the foregoing Transaction_Id.

Generating an operation queue facilitates processing of the atomic operations in sequence by the transaction manager 2022c, and also has an effect of data caching.

The transaction manager 2022c is configured to perform transaction management on each atomic operation. If the resource manager 2022b is disposed, the transaction manager 2022c processes the atomic operation queue. If no resource manager 2022b is disposed, the transaction manager 2022c directly processes each atomic operation output by the parser 2022a.

The transaction management performed by the transaction manager 2022c includes:
first, for each atomic operation, the transaction manager 2022c records a correspondence among a type of the atomic operation, an identity of a resource object targeted by the atomic operation, and a transaction identity of the same transaction.

Optionally, for each atomic operation, time, that is, a time stamp, for performing the atomic operation may be further recorded, where the time stamp is used during subsequent possible data rollback, so as to help mark a sequence for performing each atomic operation.

Then, the transaction manager 2022c pre-submits each atomic operation one by one, that is, performs each atomic operation one by one.

If all atomic operations are performed successfully, a transaction is complete, and the transaction manager 2022c generates a second operation request and instructs the SBI 2023 to send the second operation request to the first data server 203.

If a failure occurs in an atomic operation, pre-submission fails, and in this case, the transaction manager 2022c rolls back second data, where rollback is performed according to the previously recorded correspondence among a type of the atomic operation, an identity of a resource object targeted by the atomic operation, and a transaction identity of the same transaction. That is, the second data is restored to a status existing before the at least one operation in the first operation request is performed.

The second data may be restored in the following manners:
for an operation whose operation type is Retrieve, data is not changed, and therefore the operation is omitted during rollback;
for an operation whose operation type is Create, a corresponding resource object is deleted during rollback;
for an operation whose operation type is Update, during rollback, a corresponding resource object is restored to a previous record of the resource object; and
for an operation whose operation type is Delete, a corresponding resource object is created during rollback, where content of a body of the created resource object is consistent with that of a last record of the resource object in the second data before the deletion operation is performed.

If the transaction management module 2022 includes the resource manager 2022b, the transaction manager 2022c is further configured to: before performing each atomic operation one by one, generate, by using the atomic operation queue output by the resource manager 2022b, a transaction object instance of the same transaction. Specifically, when performing each atomic operation one by one, the transaction manager 2022c pre-submits each atomic operation one by one in the generated transaction object instance.

Here, generating a transaction object instance belonging to a same transaction is to respond to a case in which multiple operations are concurrently performed for one resource object. In this case, it is necessary to manage the transaction object, and a corresponding transaction object instance is generated during the management on the transaction object.

The foregoing is described by using an example in which the application server 201 submits the first operation request conforming to the RESTful format. During specific implementation, the application server 201 may also send a first operation request conforming to a particular network communications protocol format. In this case, an interface converter 2024 may be added between the interface NBI 2021 conforming to the RESTful format and the application server 201. The interface converter 2024 is configured to convert the first operation request conforming to the particular network communications protocol format into a first operation request conforming to the RESTful format.

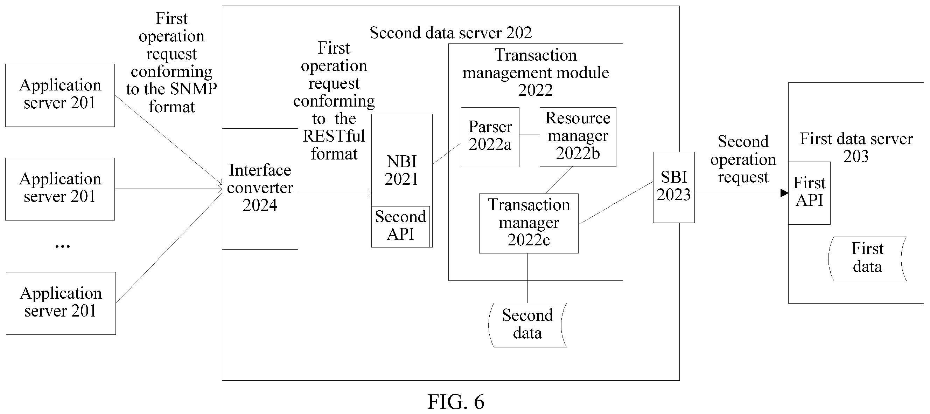

The interface converter 2024 may be located on the application server 201, or may be located on the second data server 202, as shown in FIG. 6.

The foregoing describes a network provided by the embodiments of the present invention. Based on a same invention idea, the embodiments of the present invention further provide a second data server, an application server, and a data processing method. Because their principles for resolving a problem are similar to that of the network provided by this embodiment of the present invention, for implementation of the second data server, the application server, and the data processing method, refer to implementation of the network, and same details are not repeatedly described.

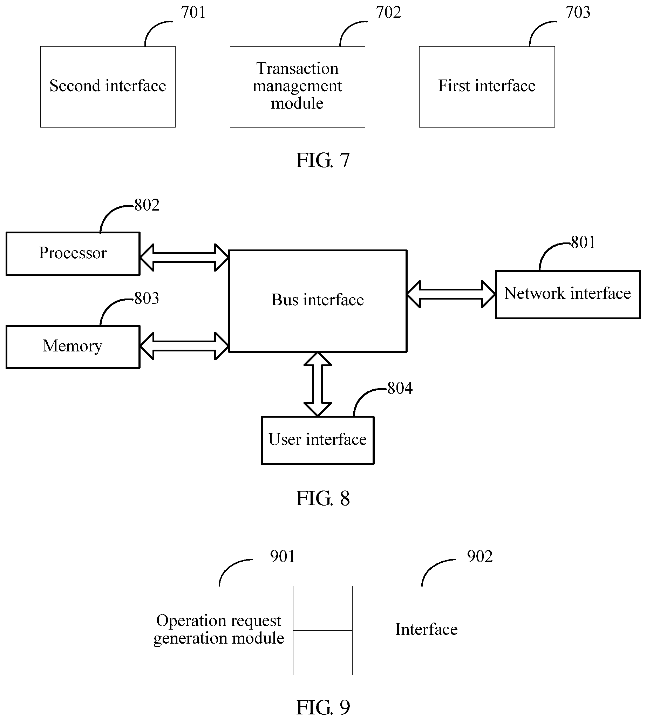

FIG. 7 is a schematic structural diagram of a first type of second data server according to an embodiment of the present invention. The second data server is in communication connection with a first data server and one or more application servers. The one or more application servers are configured to provide an application service. The first data server is configured to provide a first persistence layer service, and the first data server includes first data. The second data server is configured to provide a second persistence layer service, the second data server includes second data, and the second data includes data the same as the first data. The second data server provides a second application programming interface API to the one or more application servers, and the one or more application servers request the first persistence layer service from the first data server by invoking the second API. The first data server provides a first API to the second data server, and the second data server requests the first persistence layer service by invoking the first API.

As shown in FIG. 7, the second data server includes:
a second interface 701, configured to provide the second API and receive a first operation request that is sent by the one or more application servers by invoking the second API, where the first operation request is used to request to perform at least one operation and the at least one operation belongs to a same transaction;
a transaction management module 702, configured to perform the at least one operation on the second data after determining that the first operation request is used to request the first persistence layer service to perform the at least one operation; and generate a second operation request if each operation is performed successfully, where the second operation request is used to request to perform the at least one operation on the first data; and
a first interface 703, configured to invoke the first API to send the second operation request to the first data server.

Optionally, when determining that the first operation request is used to request the first persistence layer service to perform the at least one operation, the transaction management module 702 is specifically configured to:
determine, according to identity information of the first persistence layer service or user protocol information that is used to indicate that the application service requests the first persistence layer service, that the first operation request is used to request the first persistence layer service to perform the at least one operation, where the identity information and the user protocol information are in the first operation request.

Optionally, the transaction management module 702 is further configured to:
if the at least one operation is performed unsuccessfully, roll back the second data to a status existing before the at least one operation is performed.

Optionally, when performing each operation of the at least one operation on the second data, the transaction management module 702 is specifically configured to:
perform decomposing processing on the at least one operation, where the decomposing processing includes: breaking an operation, targeting multiple resource objects, of the at least one operation into multiple atomic operations targeting a single resource object each, where the resource object is a resource object managed by the first persistence layer service, and the atomic operation is an operation that cannot be further broken down with respect to the resource object managed by the first persistence layer service; and
perform transaction management on the atomic operations obtained after the decomposing processing, where the transaction management includes: for each atomic operation obtained after the decomposing processing, recording a correspondence among a type of the atomic operation, an identity of a resource object targeted by the atomic operation, and a transaction identity of the same transaction; and performing each atomic operation obtained after the decomposing processing.

Optionally, when rolling back the second data to the status existing before each operation of the at least one operation is performed, the transaction management module 702 is specifically configured to:
roll back, according to the correspondence recorded during the transaction processing, the second data to the status existing before each operation of the at least one operation is performed.

Optionally, the first operation request includes the transaction identity of the same transaction; and
when generating the second operation request, the transaction management module 702 is specifically configured to remove the transaction identity of the same transaction from the first operation request, to generate the second operation request.

Optionally, the transaction management module 702 is further configured to generate a failure response to the first operation request if the at least one operation is performed unsuccessfully, where the failure response is used to indicate that the at least one operation is performed unsuccessfully; and
the second interface 701 is further configured to send the failure response to the one or more application servers.

Optionally, the failure response includes at least one type of the following information of an unsuccessfully performed operation of the at least one operation:
an operation type;
a resource object, targeted by the operation, of the first persistence layer service; or
a failure reason of the operation.

Optionally, the second data server and the first data server are a same server; or
the second data server and the first data server are different servers; or
the application server and the second data server are a same server.

Optionally, the second data server and the first data server are different servers; and
the first data server and the second data server are cloud servers, and the first data server and the second data server host on different virtual machines VMs.

For other implementation details of the first type of second data server, reference may be made to the second data server 202 described above, and same details are not repeatedly described.

FIG. 8 is a schematic structural diagram of a second type of second data server according to an embodiment of the present invention.

Similar to the first type of second data server provided in the embodiment of the present invention, the second type of second data server is in communication connection with a first data server and one or more application servers. The one or more application servers are configured to provide an application service. The first data server is configured to provide a first persistence layer service, and the first data server includes first data. The second data server is configured to provide a second persistence layer service, the second data server includes second data, and the second data includes data the same as the first data. The second data server provides a second application programming interface API to the one or more application servers, and the one or more application servers request the first persistence layer service from the first data server by invoking the second API. The first data server provides a first API to the second data server, and the second data server requests the first persistence layer service by invoking the first API.

As shown in FIG. 8, the second data server includes a network interface 801, a processor 802, and a memory 803.

The memory 803 is configured to store a transaction management program, where the transaction management program includes code used to implement the second API.

The processor 802 is configured to invoke the transaction management program stored in the memory 803 to perform the following operations:
receiving, by using the network interface 801, a first operation request sent by the one or more application servers, where the first operation request is sent by the one or more application servers by invoking the second API and is used to request to perform at least one operation, and the at least one operation belongs to a same transaction;
performing the at least one operation on the second data after determining that the first operation request is used to request the first persistence layer service to perform the at least one operation; and
generating, by the second data server, a second operation request if each operation is performed successfully, and sending the second operation request to the first data server by invoking the first API and by using the network interface 801, where the second operation request is used to request to perform the at least one operation on the first data.

In FIG. 8, a bus architecture may include any quantity of interconnected buses and bridges, and specifically connects together circuits that are of one or more processors represented by the processor 802 and of a memory represented by the memory 803. The bus architecture may further connect together various other circuits such as a peripheral device, a voltage stabilizer, and a power management circuit. These are well known in the art, and therefore are not further described in this specification any more. A bus interface provides the network interface 801, which is configured to communicate with another device on a network, such as the first data server or the one or more application servers. For different user equipment, a user interface 804 may also be an interface that can be externally or internally connected to a required device. The connected device includes but is not limited to a keypad, a display, a speaker, a microphone, and a joystick.

For other implementation details of the second type of second data server, reference may be made to the second data server 202 described above, and same details are not repeatedly described.

FIG. 9 is a schematic structural diagram of a first type of application server according to an embodiment of the present invention.

A second data server is in communication connection with a first data server and one or more application servers of the first type. The application server is configured to provide an application service. The first data server is configured to provide a first persistence layer service, and the first data server includes first data. The second data server provides a second application programming interface API to the one or more application servers, and the one or more application servers request the first persistence layer service from the first data server by invoking the second API. The first data server provides a first API to the second data server, and the second data server requests the first persistence layer service by invoking the first API.

As shown in FIG. 9, the application server includes:
an operation request generation module 901, configured to: generate a first operation request, and indicate that the first operation request is used to request the first persistence layer service to perform at least one operation, where the at least one operation belongs to a same transaction, and the first operation request includes indication information used to indicate that the first operation request is used to request the first persistence layer service; and
an interface 902, configured to invoke the second API to send the first operation request to the second data server, so as to instruct the second data server to: perform the at least one operation on the second data; and generate a second operation request if each operation is performed successfully, and send the second operation request to the first data server by invoking the first API, where the second operation request is used to request to perform the at least one operation on the first data.

Optionally, the indication information used to indicate that the first operation request is used to request the first persistence layer service includes:
identity information of the first persistence layer service; or
user protocol information that is used to indicate that the application service requests the first persistence layer service.

Optionally, the first operation request is further used to instruct the second data server to: when the at least one operation is performed unsuccessfully, roll back the second data to a status existing before the at least one operation is performed.

Optionally, the first operation request includes a transaction identity of the same transaction.

Optionally, the interface 902 is further configured to:
receive a failure response sent by the second data server after the at least one operation is performed unsuccessfully, where
the failure response is used to indicate that the at least one operation is performed unsuccessfully.

Optionally, the failure response includes at least one type of the following information of an unsuccessfully performed operation of the at least one operation:
an operation type;
a resource object, targeted by the operation, of the first persistence layer service; or
a failure reason of the operation.

Optionally, the application server and the second data server are a same server.

For other implementation details of the application server, reference may be made to the foregoing application server 201, and same details are not repeatedly described.

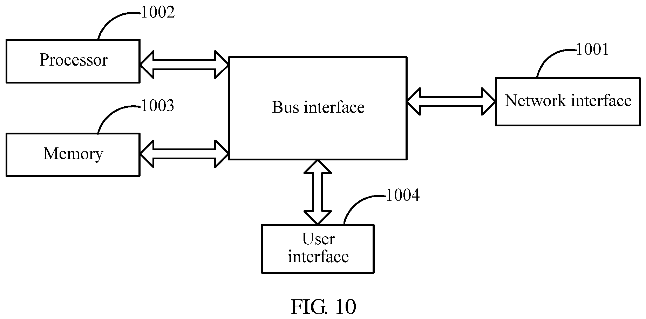

FIG. 10 is a schematic structural diagram of a second type of application server according to an embodiment of the present invention.

A second data server is in communication connection with a first data server and one or more application servers of the first type. The application server is configured to provide an application service. The first data server is configured to provide a first persistence layer service, and the first data server includes first data. The second data server provides a second application programming interface API to the one or more application servers, and the one or more application servers request the first persistence layer service from the first data server by invoking the second API. The first data server provides a first API to the second data server, and the second data server requests the first persistence layer service by invoking the first API.

As shown in FIG. 10, the application server includes:
a network interface 1001, a processor 1002, and a memory 1003.

The memory 1003 is configured to store an operation request processing program.

The processor 1002 is configured to invoke the operation request processing program stored in the memory 1003 to perform the following operations:
generating a first operation request, where the first operation request is used to request the first persistence layer service to perform at least one operation, the at least one operation belongs to a same transaction, and the first operation request includes indication information used to indicate that the first operation request is used to request the first persistence layer service; and
invoking the second API to send the first operation request to the second data server, so as to instruct the second data server to:
   perform the at least one operation on second data; and generate a second operation request if each operation is performed successfully, and send the second operation request to the first data server by invoking the first API, where the second operation request is used to request to perform the at least one operation on the first data.

In FIG. 10, a bus architecture may include any quantity of interconnected buses and bridges, and specifically connects together circuits that are of one or more processors represented by the processor 1002 and of a memory represented by the memory 1003. The bus architecture may further connect together various other circuits such as a peripheral device, a voltage stabilizer, and a power management circuit. These are well known in the art, and therefore are not further described in this specification any more. A bus interface provides the network interface 1001, which is configured to communicate with another device on a network, for example, the second data server. For different user equipment, a user interface 1004 may also be an interface that can be externally or internally connected to a required device. The connected device includes but is not limited to a keypad, a display, a speaker, a microphone, and a joystick.

For other implementation details of the second type of application server, reference may be made to the foregoing application server 201, and same details are not repeatedly described.

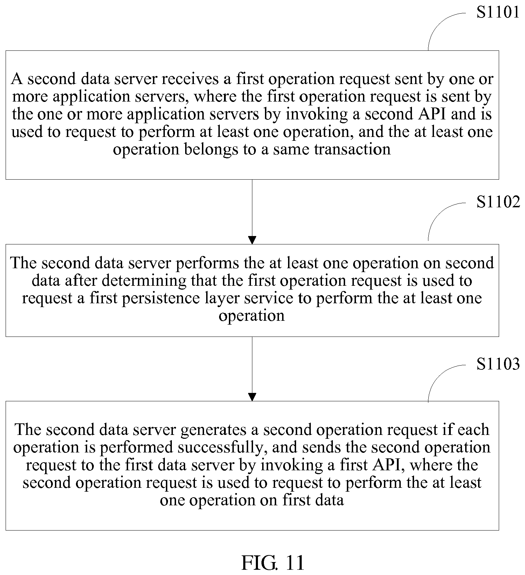

FIG. 11 is a flowchart of a first data processing method according to an embodiment of the present invention.

The first data processing method may be applied to a second data server. The second data server is in communication connection with a first data server and one or more application servers. The application server is configured to provide an application service. The first data server is configured to provide a first persistence layer service, and the first data server includes first data. The second data server is configured to provide a second persistence layer service, the second data server includes second data, and the second data includes data the same as the first data. The second data server provides a second application programming interface API to the application server, and the application server requests the first persistence layer service from the first data server by invoking the second API. The first data server provides a first API to the second data server, and the second data server requests the first persistence layer service by invoking the first API.

As shown in FIG. 11, the method includes:
S1101: The second data server receives a first operation request sent by the one or more application servers, where the first operation request is sent by the one or more application servers by invoking the second API and is used to request to perform at least one operation, and the at least one operation belongs to a same transaction.
S1102: The second data server performs the at least one operation on the second data after determining that the first operation request is used to request the first persistence layer service to perform the at least one operation.
S1103: The second data server generates a second operation request if each operation is performed successfully, and sends the second operation request to the first data server by invoking the first API, where the second operation request is used to request to perform the at least one operation on the first data.

Optionally, the determining, by the second data server, that the first operation request is used to request the first persistence layer service to perform the at least one operation includes:
determining, by the second data server according to identity information of the first persistence layer service or user protocol information that is used to indicate that the application service requests the first persistence layer service, that the first operation request is used to request the first persistence layer service, where the identity information and the user protocol information are in the first operation request.

Optionally, the method further includes:
if the at least one operation is performed unsuccessfully, rolling back, by the second data server, the second data to a status existing before the at least one operation is performed. Optionally, the performing, by the second data server, each operation of the at least one operation on the second data includes:
performing, by the second data server, decomposing processing on the at least one operation, where the decomposing processing includes: breaking an operation, targeting multiple resource objects, of the at least one operation into multiple atomic operations targeting a single resource object each, where the resource object is a resource object managed by the first persistence layer service, and the atomic operation is an operation that cannot be further broken down with respect to the resource object managed by the first persistence layer service; and
performing, by the second data server, transaction management on the atomic operations obtained after the decomposing processing, where the transaction management includes: for each atomic operation obtained after the decomposing processing, recording a correspondence among a type of the atomic operation, an identity of a resource object targeted by the atomic operation, and a transaction identity of the same transaction; and performing each atomic operation obtained after the decomposing processing.

Optionally, the rolling back, by the second data server, the second data to a status existing before each operation of the at least one operation is performed includes:
rolling back, by the second data server according to the correspondence recorded during the transaction processing, the second data to the status existing before each operation of the at least one operation is performed.

Optionally, the first operation request includes the transaction identity of the same transaction; and
the generating, by the second data server, a second operation request includes: removing, by the second data server, the transaction identity of the same transaction from the first operation request, to generate the second operation request.

Optionally, the method further includes: if the at least one operation is performed unsuccessfully, sending, by the second data server to the one or more application servers, a failure response to the first operation request, where the failure response is used to indicate that the at least one operation is performed unsuccessfully.

Optionally, the failure response includes at least one type of the following information of an unsuccessfully performed operation of the at least one operation:
an operation type;
a resource object, targeted by the operation, of the first persistence layer service; or
a failure reason of the operation.

Optionally, the first server and the second data server are cloud servers, and the first data server and the second data server host on different virtual machines VMs.

For other implementation details of the method, reference may be made to specific implementation of the second data server 202 described above, and same details are not repeatedly described.

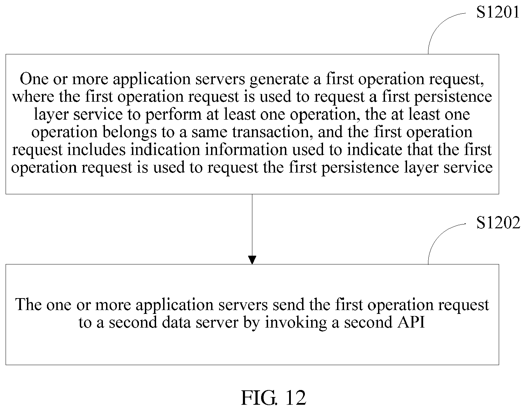

FIG. 12 is a flowchart of a second data processing method according to an embodiment of the present invention.

The method may be applied to one or more application servers. A second data server is in communication connection with a first data server and the one or more application servers. The one or more application servers are configured to provide an application service. The first data server is configured to provide a first persistence layer service, and the first data server includes first data. The second data server provides a second application programming interface API to the application server, and the one or more application servers request the first persistence layer service from the first data server by invoking the second API. The first data server provides a first API to the second data server, and the second data server requests the first persistence layer service by invoking the first API.

As shown in FIG. 12, the method includes:
S1201: The one or more application servers generate a first operation request, where the first operation request is used to request the first persistence layer service to perform at least one operation, the at least one operation belongs to a same transaction, and the first operation request includes indication information used to indicate that the first operation request is used to request the first persistence layer service.
S1202: The one or more application servers send the first operation request to the second data server by invoking the second API, so as to instruct the second data server to:
   perform the at least one operation on second data; and generate a second operation request if each operation is performed successfully, and send the second operation request to the first data server by invoking the first API, where the second operation request is used to request to perform the at least one operation on the first data.

Optionally, the indication information used to indicate that the first operation request is used to request the first persistence layer service includes:
identity information of the first persistence layer service; or
user protocol information that is used to indicate that the application service requests the first persistence layer service.

Optionally:
the first operation request is further used to instruct the second data server to: when the at least one operation is performed unsuccessfully, roll back the second data to a status existing before the at least one operation is performed.

Optionally, the first operation request includes a transaction identity of the same transaction.

Optionally, the method further includes:
receiving, by the one or more application servers, a failure response sent by the second data server by using the second API after the at least one operation is performed unsuccessfully, where
the failure response is used to indicate that the at least one operation is performed unsuccessfully.

Optionally, the failure response includes at least one type of the following information of an unsuccessfully performed operation of the at least one operation:
an operation type;
a resource object, targeted by the operation, of the first persistence layer service; or
a failure reason of the operation.

Optionally, the first data server and the second data server are cloud servers, and the first data server and the second data server host on different virtual machines VMs.

For other implementation details of the method, reference may be made to specific implementation of the application server 201 described above, and same details are not repeatedly described.

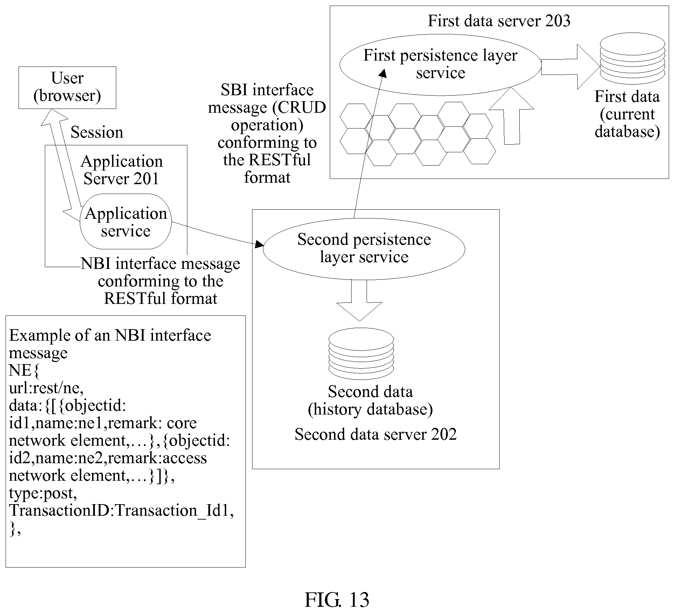

The foregoing describes various possible implementation manners of the embodiments of the present invention. The following further describes, by using a network architecture shown in FIG. 13, a persistence layer service provided in the embodiments of the present invention.

As shown in FIG. 13, an end user, that is, a browser, creates a session (Session) and invokes an application service provided by an application server 201. The application service uses, by using an NBI interface conforming to the RESTful format, a second persistence layer service provided by a second data server 202 provided in this embodiment of the present invention.

The second data server 202 provides a transaction service for second data (here a database is used as an example, referred to as a "history database") of the second data server 202, and sends an SBI interface message conforming to the RESTful format to a first data server 203 if a transaction is completed, where an operation type is a CRUD operation specified in the RESTful standard.

The first data server 203 processes first data (here a database is used as an example, referred to as a "current database") according to a received operation request.

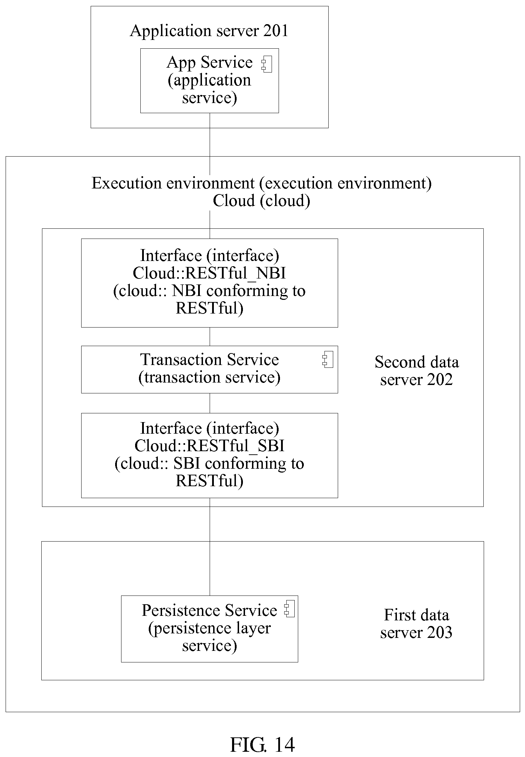

FIG. 14 is an architecture component diagram, based on the network architecture shown in FIG. 13, of a second persistence layer service provided by a second data server 202 in a cloud service scenario. The second data server 202 includes an NBI 2021, an SBI 2023, and a transaction management module 2022 in FIG. 14. An application server 201 provides an application service, the second data server 202 provides the second persistence layer service, that is, a transaction service, and a first data server 203 provides an original cloud persistence layer service.

The application service adds a transaction identity (TransactionID) field for a northbound interface NBI, conforming to the RESTful format, of the original cloud persistence layer service. That is, operations with a same TransactionID may be bound as a transaction. An operation type may be divided into CRUD operations according to the RESTful standard.

The transaction service decomposes one of CRUD operations delivered by the application service into multiple atomic operations, binds atomic operations with a same TransactionID as a transaction object instance, and for each atomic operation, saves, as a record to a history database, a correspondence between an operation type of the atomic operation and a TransactionId of a Transaction to which an identity ObjectID of a resource object targeted by the atomic operation belongs, for performing data rollback when an operation fails.

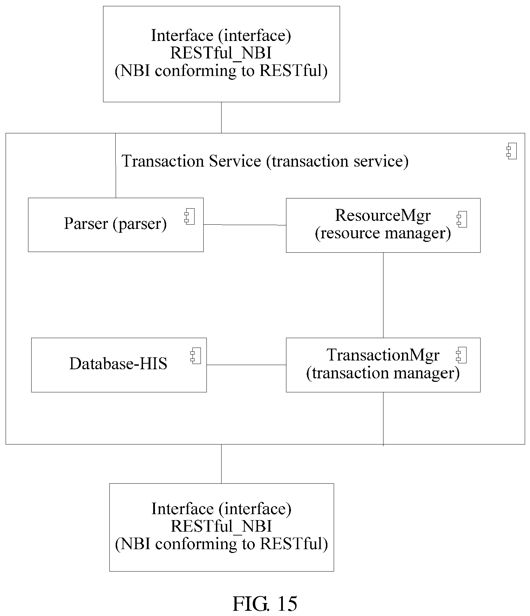

FIG. 15 is an internal structural diagram of the transaction service shown in FIG. 14. As shown in FIG. 15, the transaction service includes: a parser (Parser), a resource manager (ResourceMgr), a transaction manager (TransactionMgr), and a history database (Database-HIS).

After a first operation request delivered by an application service according to the RESTful format enters the transaction service through an NBI interface, first, the parser decomposes multiple operations that have a same TransactionId and that are included in the first operation request into atomic operations.

Then, the resource manager generates an atomic operation queue by using the multiple atomic operations obtained after the decomposing by the parser and sends the atomic operation queue to the transaction manager.

The transaction manager generates a transaction object instance by using the atomic operation queue, and pre-submits the atomic operations in the atomic operation queue one by one;
if all the atomic operations are performed successfully, generates a second operation request and sends the second operation request to the first data server 203, where the second operation request includes all operations in the first operation request; and
if a failure occurs in atomic operation during a process of performing the atomic operations one by one, rolls back the history database to a status existing before each atomic operation is performed.

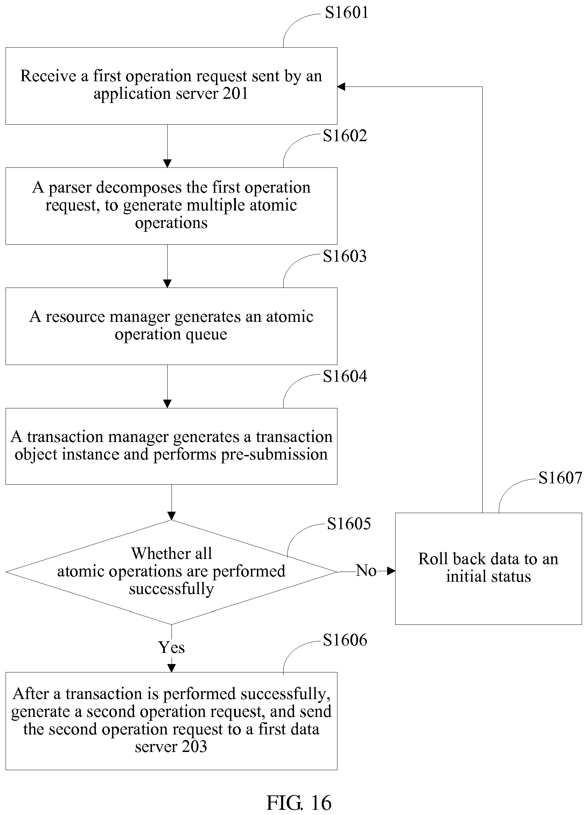

FIG. 16 shows a process of processing performed by a second data server 202. As shown in FIG. 16, the processing performed by the second data server 202 includes the following steps:
S1601: Receive a first operation request sent by an application server 201.
S1602: A parser decomposes the first operation request, to generate multiple atomic operations.
S1603: A resource manager generates an atomic operation queue.
S1604: A transaction manager generates a transaction object instance and performs pre-submission.
S1605: Determine whether all atomic operations are performed successfully; if yes, perform step S1606; and otherwise, perform step S1607.
S1606: After a transaction is performed successfully, generate a second operation request, and send the second operation request to a first data server 203.
S1607: Roll back data to an initial status.

In summary, the embodiments of the present invention provide a server and a data processing method. A persistence layer service that has a transaction management function is provided between an application service and a cloud persistence layer service, so that transaction management by the application service is implemented without requiring the application service itself to implement transaction management, and implementation complexity of the application service is reduced.

In addition, because the persistence layer service that has a transaction management function implements transaction management, multiple application services may implement a transaction management function by using the persistence layer service, avoiding redundant development and configuration caused by repeated implementation of a transaction management function on each application service.

In addition, a problem is also avoided that if the application service directly sends an operation request to the cloud persistence layer service and some operations are performed unsuccessfully, because the cloud service does not have a transaction management function, data cannot be restored to a status existing before these operations are performed.

Further, when failing in transaction management, the persistence layer service that has a transaction management function performs data rollback, ensuring data consistency between the persistence layer service that has a transaction management function and the cloud persistence layer service. Further, the persistence layer service that has a transaction management function is also located in cloud, and a cloud server including the persistence layer service and a cloud server including an original cloud persistence layer service host on different virtual machines (Virtual Machines, VMs). In one aspect, implementing, by a cloud VM, the persistence layer service that has a transaction management function may implement on-demand data resource assignment. In another aspect, the cloud server including the persistence layer service that has a transaction management function and the cloud server including the original cloud persistence layer service host on different VMs, which avoids that the persistence layer service that has a transaction management function occupies a data processing resource for the original persistence layer service, and therefore avoids impact on the original persistence layer service.

The persistence layer service that has a transaction management function provided in the embodiments of the present invention may be used as a loose-coupling component designed based on a service-oriented architecture (Service-Oriented Architecture, SOA), and is integrated with another service to provide a service that has a transaction management function, thereby implementing the transaction management function of the persistence layer service more flexibly. A person skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some exemplary embodiments of the present invention have been described, a person skilled in the art can make changes and modifications to these embodiments once they learn the basic inventive concept. Therefore, the following claims are intended to be construed as to cover the exemplary embodiments and all changes and modifications falling within the scope of the present invention.

Obviously, a person skilled in the art can make various modifications and variations to the present invention without departing from the spirit and scope of the present invention. The present invention is intended to cover these modifications and variations provided that they fall within the scope of protection defined by the following claims and their equivalent technologies.

## Claims

1. A data processing method, applied to a second data server, wherein the second data server is in communication connection with a first data server and one or more application servers; the application server is configured to provide an application service; the first data server is configured to provide a first persistence layer service, and the first data server comprises first data; the second data server is configured to provide a second persistence layer service, the second data server comprises second data, and the second data comprises data the same as the first data; the second data server provides a second application programming interface API to the application server, and the application server requests the first persistence layer service from the first data server by invoking the second API; the first data server provides a first API to the second data server, and the second data server requests the first persistence layer service by invoking the first API; and the method comprises:
receiving, by the second data server, a first operation request sent by the one or more application servers, wherein the first operation request is sent by the one or more application servers by invoking the second API and is used to request to perform at least one operation, and the at least one operation belongs to a same transaction;
performing, by the second data server, the at least one operation on the second data after determining that the first operation request is used to request the first persistence layer service to perform the at least one operation; and
generating, by the second data server, a second operation request if each operation is performed successfully, and sending the second operation request to the first data server by invoking the first API, wherein the second operation request is used to request to perform the at least one operation on the first data.

2. The method according to claim 1, wherein the determining, by the second data server, that the first operation request is used to request the first persistence layer service to perform the at least one operation comprises:
determining, by the second data server according to identity information of the first persistence layer service or user protocol information that is used to indicate that the application service requests the first persistence layer service, that the first operation request is used to request the first persistence layer service, wherein the identity information and the user protocol information are in the first operation request.

3. The method according to claim 1 or 2, wherein the method further comprises:
if the at least one operation is performed unsuccessfully, rolling back, by the second data server, the second data to a status existing before the at least one operation is performed.

4. The method according to claim 3, wherein
the performing, by the second data server, each operation of the at least one operation on the second data comprises:
performing, by the second data server, decomposing processing on the at least one operation, wherein the decomposing processing comprises: breaking an operation, targeting multiple resource objects, of the at least one operation into multiple atomic operations targeting a single resource object each, wherein the resource object is a resource object managed by the first persistence layer service, and the atomic operation is an operation that cannot be further broken down with respect to the resource object managed by the first persistence layer service; and
performing, by the second data server, transaction management on the atomic operations obtained after the decomposing processing, wherein the transaction management comprises: for each atomic operation obtained after the decomposing processing, recording a correspondence among a type of the atomic operation, an identity of a resource object targeted by the atomic operation, and a transaction identity of the same transaction; and performing each atomic operation obtained after the decomposing processing.

5. The method according to claim 4, wherein
the rolling back, by the second data server, the second data to a status existing before each operation of the at least one operation is performed comprises:
rolling back, by the second data server according to the correspondence recorded during the transaction processing, the second data to the status existing before each operation of the at least one operation is performed.

6. The method according to any one of claims 1 to 5, wherein
the first operation request comprises the transaction identity of the same transaction; and
the generating, by the second data server, a second operation request comprises: removing, by the second data server, the transaction identity of the same transaction from the first operation request, to generate the second operation request.

7. The method according to any one of claims 1 to 6, wherein the method further comprises: if the at least one operation is performed unsuccessfully, sending, by the second data server to the one or more application servers, a failure response to the first operation request, wherein the failure response is used to indicate that the at least one operation is performed unsuccessfully.

8. The method according to claim 7, wherein the failure response comprises at least one type of the following information about an unsuccessfully performed operation of the at least one operation:
an operation type;
a resource object, targeted by the operation, of the first persistence layer service; or
a failure reason of the operation.

9. The method according to any one of claims 1 to 8, wherein the first server and the second data server are cloud servers, and the first data server and the second data server host on different virtual machines VMs.

10. A data processing method, applied to one or more application servers, wherein a second data server is in communication connection with a first data server and the one or more application servers; the one or more application servers are configured to provide an application service; the first data server is configured to provide a first persistence layer service, and the first data server comprises first data; the second data server provides a second application programming interface API to the application server, and the one or more application servers request the first persistence layer service from the first data server by invoking the second API; the first data server provides a first API to the second data server, and the second data server requests the first persistence layer service by invoking the first API; and the method comprises:
generating, by the one or more application servers, a first operation request, wherein the first operation request is used to request the first persistence layer service to perform at least one operation, the at least one operation belongs to a same transaction, and the first operation request comprises indication information used to indicate that the first operation request is used to request the first persistence layer service; and
sending, by the one or more application servers, the first operation request to the second data server by invoking the second API, so as to instruct the second data server to:
perform the at least one operation on the second data; and generate a second operation request if each operation is performed successfully, and send the second operation request to the first data server by invoking the first API, wherein the second operation request is used to request to perform the at least one operation on the first data.

11. The method according to claim 10, wherein the indication information used to indicate that the first operation request is used to request the first persistence layer service comprises:
identity information of the first persistence layer service; or
user protocol information that is used to indicate that the application service requests the first persistence layer service.

12. A second data server, wherein the second data server is in communication connection with a first data server and one or more application servers; the one or more application servers are configured to provide an application service; the first data server is configured to provide a first persistence layer service, and the first data server comprises first data; the second data server is configured to provide a second persistence layer service, the second data server comprises second data, and the second data comprises data the same as the first data; the second data server provides a second application programming interface API to the one or more application servers, and the one or more application servers request the first persistence layer service from the first data server by invoking the second API; the first data server provides a first API to the second data server, and the second data server requests the first persistence layer service by invoking the first API; and
the second data server comprises:
a second interface, configured to provide the second API and receive a first operation request that is sent by the one or more application servers by invoking the second API, wherein the first operation request is used to request to perform at least one operation and the at least one operation belongs to a same transaction;
a transaction management module, configured to perform the at least one operation on the second data after determining that the first operation request is used to request the first persistence layer service to perform the at least one operation; and generate a second operation request if each operation is performed successfully, wherein the second operation request is used to request to perform the at least one operation on the first data; and
a first interface, configured to invoke the first API to send the second operation request to the first data server.

13. The second data server according to claim 12, wherein when determining that the first operation request is used to request the first persistence layer service to perform the at least one operation, the transaction management module is specifically configured to:
determine, according to identity information of the first persistence layer service or user protocol information that is used to indicate that the application service requests the first persistence layer service, that the first operation request is used to request the first persistence layer service to perform the at least one operation, wherein the identity information and the user protocol information are in the first operation request.

14. The second data server according to claim 12 or 13, wherein the transaction management module is further configured to:
if the at least one operation is performed unsuccessfully, roll back the second data to a status existing before the at least one operation is performed.

15. The second data server according to claim 14, wherein when performing each operation of the at least one operation on the second data, the transaction management module is specifically configured to:
perform decomposing processing on the at least one operation, wherein the decomposing processing comprises: breaking an operation, targeting multiple resource objects, of the at least one operation into multiple atomic operations targeting a single resource object each, wherein the resource object is a resource object managed by the first persistence layer service, and the atomic operation is an operation that cannot be further broken down with respect to the resource object managed by the first persistence layer service; and
perform transaction management on the atomic operations obtained after the decomposing processing, wherein the transaction management comprises: for each atomic operation obtained after the decomposing processing, recording a correspondence among a type of the atomic operation, an identity of a resource object targeted by the atomic operation, and a transaction identity of the same transaction; and performing each atomic operation obtained after the decomposing processing.

16. The second data server according to claim 15, wherein
when rolling back the second data to the status existing before each operation of the at least one operation is performed, the transaction management module is specifically configured to:
roll back, according to the correspondence recorded during the transaction processing, the second data to the status existing before each operation of the at least one operation is performed.

17. The second data server according to any one of claims 12 to 16, wherein
the first operation request comprises the transaction identity of the same transaction; and
when generating the second operation request, the transaction management module is specifically configured to remove the transaction identity of the same transaction from the first operation request, to generate the second operation request.

18. The second data server according to any one of claims 12 to 16, wherein
the transaction management module is further configured to generate a failure response to the first operation request if the at least one operation is performed unsuccessfully, wherein the failure response is used to indicate that the at least one operation is performed unsuccessfully; and
the second interface is further configured to send the failure response to the one or more application servers.

19. The second data server according to claim 18, wherein the failure response comprises at least one type of the following information about an unsuccessfully performed operation of the at least one operation:
an operation type;
a resource object, targeted by the operation, of the first persistence layer service; or
a failure reason of the operation.

20. The second data server according to any one of claims 12 to 19, wherein
the second data server and the first data server are a same server; or
the second data server and the first data server are different servers; or
the application server and the second data server are a same server.

21. The second data server according to claim 20, wherein the second data server and the first data server are different servers; and
the first data server and the second data server are cloud servers, and the first data server and the second data server host on different virtual machines VMs.

22. An application server, wherein a second data server is in communication connection with a first data server and one or more application servers; the application server is configured to provide an application service; the first data server is configured to provide a first persistence layer service, and the first data server comprises first data; the second data server provides a second application programming interface API to the one or more application servers, and the one or more application servers request the first persistence layer service from the first data server by invoking the second API; the first data server provides a first API to the second data server, and the second data server requests the first persistence layer service by invoking the first API; and
the application server comprises:
an operation request generation module, configured to: generate a first operation request, and indicate that the first operation request is used to request the first persistence layer service to perform at least one operation, wherein the at least one operation belongs to a same transaction, and the first operation request comprises indication information used to indicate that the first operation request is used to request the first persistence layer service; and
an interface, configured to invoke the second API to send the first operation request to the second data server, so as to instruct the second data server to: perform the at least one operation on the second data; and generate a second operation request if each operation is performed successfully, and send the second operation request to the first data server by invoking the first API, wherein the second operation request is used to request to perform the at least one operation on the first data.

23. The application server according to claim 22, wherein the indication information used to indicate that the first operation request is used to request the first persistence layer service comprises:
identity information of the first persistence layer service; or
user protocol information that is used to indicate that the application service requests the first persistence layer service.
